# EUROPEAN PATENT APPLICATION

(11) **EP 1 429 162 A1**
(43) Date of publication of application: **16.06.2004**
(21) Application number: 02360342.6
(22) Date of filing: 12.12.2002
(51) Int. Cl.: G02B 6/34

(54) **Arrayed waveguide grating device and method for compensating chromatic dispersion and dispersion slope**

(71) Applicant: Avanex Corporation, Fremont, CA 94538 (US)
(72) Inventor: Lazaro Villa, José Antonio, Dr., 70439 Stuttgart (DE); Klekamp, Axel, Dr., 71706 Markgröningen (DE)
(74) Representative: Haines, Miles John

(57) **Abstract**

The present invention relates to an arrayed waveguide grating device (AWG) comprising an input slab waveguide (14), an output slab waveguide (18) and arrayed waveguides (15, 16) connecting said input and said output slab waveguide (14, 18), characterized by means (22, 24, 28, 30, 34) for modifying the phase and/or amplitude distribution with the modification being selected such as to compensate for chromatic dispersion. Further, the invention relates to a method for compensating chromatic dispersion and dispersion slope (Fig. 3).

## Description

The present invention relates to an arrayed waveguide grating device (AWG) comprising an input slab waveguide, an output slab waveguide and arrayed waveguides connecting said input and said output slab waveguide. The invention further relates to a method for compensating chromatic dispersion in such a device.

Arrayed waveguide gratings (AWG) are generally known. They have become increasingly popular as wavelength (de)multiplexers for WDM applications. They have proven to be capable of precise demultiplexing of a large number of channels with relatively low loss. Therefore, AWGs are playing a key roll in dense WDM network systems.

Generally, an arrayed waveguide grating device consists of five basic sections, namely an input waveguide, the input slab waveguide, the arrayed waveguides, the output slab waveguide, and finally the output waveguides. The input waveguide couples light from a fiber to the input slab waveguide in which the light is lanced into the arrayed waveguides. After the waveguides, the light propagates into the output slab waveguide and then finally into the output waveguides. Due to different path lengths, each wavelength will couple into a unique output waveguide. The position and spacing between output waveguides determines the output wavelength, its spacing and center frequency. Because of their excellent properties, such as low insertion loss, large optical bandwidth and output number, compactness (small device dimensions), polarization independence, low crosstalk, and excellent fabrication tolerances, AWGs have many potential applications such as wavelength multiplexers/demultiplexers, add-drop multiplexers, couplers, dividers/splitters, combiners, switches, filters, samplers/monitors, and equalizers. They also can be easily fabricated in more complex photonic integrated circuits, such as lasers, receivers, modulators, amplifiers and WDM circuits.

To meet the increasing demand for bandwidth nowadays, high capacity wavelength division multiplexing long-haul transmission systems have been proposed. In such systems, chromatic dispersion is one of the primary limits with respect to a further increase of bandwidth. This chromatic dispersion is generally induced by transmission lines or optical devices and limits the highest bit rate of such systems. Chromatic dispersion is caused by different wavelengths travelling at different speeds in fibers. In effect, the spectral components of a pulse travel at different speeds. This results in an output pulse being a little bit extended in time. Consequently, the spacing of the input pulses must not fall below a predetermined time limit as to avoid the overlapping of two subsequent output pulses.

Therefore, there are efforts in the art to compensate for such chromatic dispersion effects, particularly in order to increase the bit rate limit.

In this respect, several ideas have been proposed in the past, for example dispersion compensating fibers, chirped fiber gratings (CFBG) and integrated planar devices. Integrated planar devices for dispersion compensation are based on a set of Mach-Zehnder interferometers (MZI) or on ring resonators.

Some of the known dispersion compensation solutions only work for one specific wavelength. Because of the large number of channels in dense WDM systems, it is very expensive to use a dispersion compensation device for each WDM channel. Periodic filters, based on MZI and ring resonator designs are advantageous because only one chromatic dispersion compensator device is needed for all the channels. Nevertheless, such devices produce a fix compensation equal for all the WDM channels.

Examples for dispersion compensating devices are disclosed in "Integrated All-Pass Filters for Tunable Dispersion and Dispersion Slope Compensation", C.K. Madsen et al., IEEE PHOTONICS TECHNOLOGY LETTERS, VOL. 11, NO. 12, DECEMBER 1999, pages 1623-1625, "RECENT PROGRESS IN FIBER DISPERSION COMPENSATORS", M. J. Li, ECOC '01 (European Conference on Optical Communications 2001), "2x40-channel dispersion-slope compensator for 40-Gbit/s WDM transmission systems covering entire C- and L-bands", H. Takenouchi et al., OFC 2001, "Tunable Dispersion Compensation in a 40 Gb/s System using a Compact FIR Lattice Filter in SiON Technology", M. Bohn et al., ECOC '02, "Tunable Dispersion Compensators Realized in High-Refractive-Index-Contrast SiON Technology", G.L. Bona et al., ECOC '02, or in "Second- and Third-Order Dispersion Compensator Using a High-Resolution Arrayed-Waveguide Grating", H. Tsuda et al., IEEE PHOTONICS TECHNOLOGY LETTERS, VOL. 11, NO. 5, May 1999, pages 569-571.

Particularly in the last-mentioned paper, an arrayed waveguide grating is supplemented by a spatial filter and a mirror. The dispersion compensation is performed by decomposing the input waveform into its frequency components, modulating the phase of each component by a spatial filter, reflecting them from a mirror, and reforming the waveform by combining the components. This compensator provides a periodic frequency response, which means that it can provide the same dispersion compensation for all the channels. However, the dispersion of the transmission fibers is wavelength-dependent and a different dispersion compensation value is necessary for each channel.

In view of the above, it is an object of the present invention to provide an arrayed waveguide grating device which is capable of compensating for chromatic dispersion and dispersion slope in the optical communication system. Further, problems due to mismatching of transmission spectra between the optical devices and the chromatic dispersion compensator device should be avoided.

This object is solved by the arrayed waveguide grating device as mentioned at the outset which comprises means for modifying the phase and/or amplitude distribution with the modification being selected such as to compensate for chromatic dispersion.

The inventors have found out that by deliberately changing the phase and/or amplitude distribution of the arrayed waveguide grating (AWG), a compensation of chromatic dispersion can be achieved. With the inventive means for modifying it is possible to produce a propagation of the light through the arrayed waveguide grating with a specific phase and amplitude distribution. As a result of these modifications, it is possible to obtain a dispersion compensation transmission with minimum crosstalk and bandwidth penalties.

A further advantage of the inventive AWG device is the integration of two functionalities, namely when wavelength multiplexing/demultiplexing, and dispersion compensation, in one device instead of using two different devices as proposed in the art.

In one embodiment, said means is formed as an area in the region of the arrayed waveguide which provide a refractive index change in order to modify the phase distribution. Preferably, said means comprises at least one electrode for heating said area as to achieve an index change.

This measure allows a tunable dispersion compensation which may be adjusted by supplying a respective voltage to the electrode.

An alternative approach for a tunable dispersion compensation is to provide at least one trench in the region of the arrayed waveguide which trench is filled with a polymer material. Due to the thermo-optical coefficient of the polymer, usually two orders of magnitude higher than the one of the arrayed waveguide material (silica), the required trenches are smaller than the electrode heating the polymer material. In order to reduce losses introduced by trenches having a width above a predetermined value, it is advantageous to provide several spaced trenches and a segmented electrode.

It has been found out that with the above-mentioned arrayed waveguide devices dispersion values of approximately ± 90 ps/nm may be obtained.

In a further preferred embodiment, said means is provided within that output slab waveguide as areas of different refractive indices as to achieve a phase distribution different for each output channel.

This measure allows a differential dispersion compensation which means slightly different dispersion compensation values for different output channels. It is possible to compensate the dispersion slope of a transmission fiber.

Since the physical space available for the modification of the phase distribution for each output channel is quite limited, the electrode-over-silica solution as mentioned above is not possible. For a fixed differential dispersion compensation, an irradiation of predetermined areas of the output slab waveguide by ultra violet (UV) light is proposed. For a tunable solution, it is preferred to provide a set of trenches filled with polymer and an electrode for tuning by heating. With this technical solution, wavelength dependent dispersion compensation values of approx. ± 17 ps/nm² over 40 channels at 200 GHz (64 nm spectrum range) can be reached in AWG-designs with standard (or usual) design parameters.

In a further preferred embodiment, said means is provided as tapered sections in the arrayed waveguides as to achieve a modification of the amplitude distribution. Preferably, said means is provided as a misalignment within at least one of the waveguides of said arrayed waveguide. A further preferred approach is to provide a variation of the cross section of at least one waveguide of said arrayed waveguide.

This measure allows a fixed dispersion compensation of the third order dispersion without using separate additional compensation devices.

In a further preferred embodiment, said means comprises at least one Mach-Zehnder interferometer substituting a central section of at least one waveguide of said arrayed waveguide.

This measure has the advantage that a tunable dispersion compensation may be achieved by adjusting the amplitude distribution.

The object of the present invention is also solved by a method for compensating chromatic dispersion in an arrayed waveguide grating device as mentioned in the outset in that the phase and/or amplitude distribution is modified as to compensate the chromatic dispersion.

Preferably, the phase distribution is modified by adjusting the optical length of the arrayed waveguide, preferably by variation of the physical length of the waveguides of the arrayed waveguide. More preferably, the refractive index within an area along the optical path of the arrayed waveguide is changed, for example by heating said area. Preferably, said area comprises at least one trench filled with a polymer which is adapted to provide a precise attenuation.

It is further preferred that the phase distribution is modified differently for each output channel of the AWG, preferably by a variation of the refractive index in the output slab waveguide. Preferably, the amplitude distribution is modified by adjusting the attenuation characteristic of at least one waveguide of said arrayed waveguide. Preferably, the attenuation characteristic is adjusted by providing tapered sections in the waveguides of said arrayed waveguide or, for example, by misaligning waveguides or by varying the cross section of waveguides.

It is also preferred that the attenuation characteristic of at least one waveguide of said arrayed waveguide is modified by providing a region filled with a polymer.

The afore-mentioned methods result in the same advantages as mentioned in connection with the description of the arrayed waveguide grating device. Hence, a further repetition of these advantages may be omitted.

Further features and advantages can be taken from the following description and the enclosed drawings.

It is to be understood that the features mentioned above and those yet to be explained below can be used not only in the respective combinations indicated, but also in other combinations or in isolation, without leaving the scope of the present invention.

Embodiments of the invention are shown in the drawings and will be explained in more detail in the description below with reference to same. In the drawings:
- Fig. 1: is a schematic plan view of an arrayed waveguide grating device (AWG);
- Fig. 2A, B and C: are schematic views of details of the arrayed waveguide grating device shown in Fig. 1, wherein the details illustrate different possibilities of chromatic dispersion compensation;
- Fig. 3: is a schematic plan view of an arrayed waveguide grating device with a further alternative of a means for chromatic dispersion compensation; and
- Fig. 4: is a schematic partial view of an output slab waveguide having incorporated means for chromatic dispersion compensation.

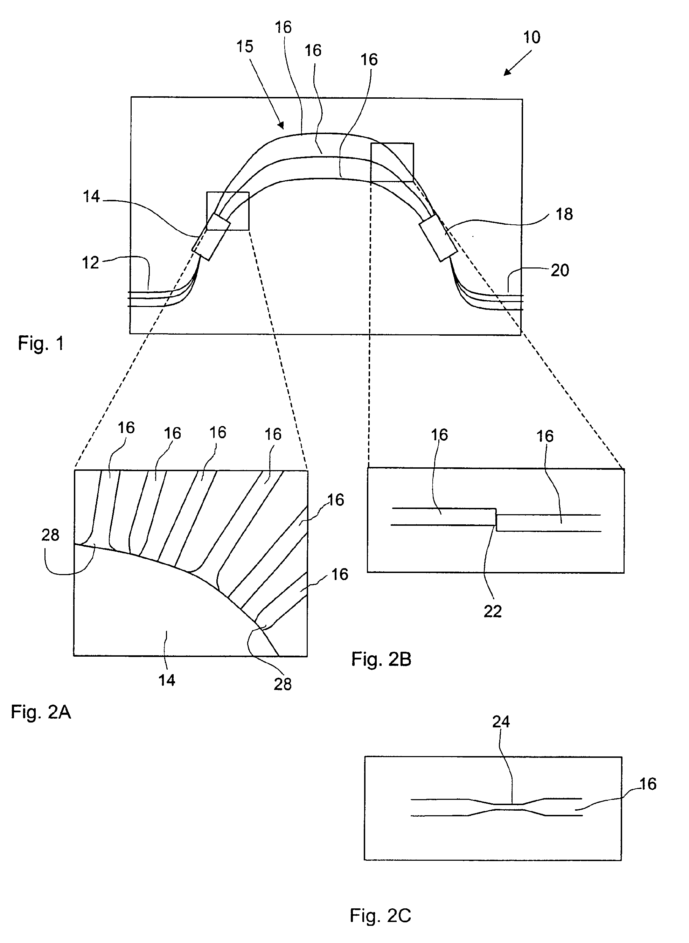

In Fig. 1, an arrayed waveguide grating device is schematically shown and indicated with reference numeral 10. Arrayed waveguide grating devices (AWGs) are known planar light wave circuits and have, therefore, not to be described in detail herein. Generally, arrayed waveguide grating devices can be derived from a variety of materials, but all waveguides are basically transparent dielectric structures that transport light energy. Like an optical fiber, they have a core and a guiding structure (cladding) with different indices of refraction to guide the light. AWGs can be constructed by patterning thin films deposited onto a substrate to form waveguides. Typically, photolithographic processes are used to define the waveguide pattern to be implemented on the substrate (which may be silicon, polymer or other dielectric materials). By controlling the waveguide structure, size and refractive index, the waveguides can be made into single mode structures and used for DWDMs (optical add-drop modules, switches, attenuators and optical cross-connects).

Waveguides are formed on substrates using semiconductor-manufacturing processes. Multiple functions can easily be integrated onto one device. The materials most commonly used include silica, silicon, LiNbO₃, polymer and III-V materials such as InP and GaAs. As already mentioned, the AWG is a planar waveguide device where the waveguides are photolithographically etched onto a silicon substrate creating devices as diverse as a 1xN mux/demux to an NxN switch fabric to variable optical attenuators. In addition, waveguide devices have the potential to integrate multiple functions monolithically, reducing costs, improving performance and increasing simplicity.

The arrayed waveguide grating device 10 shown in Fig. 1 comprises five basic sections, namely the input waveguides 12, an input slab waveguide 14, an arrayed waveguide 15 comprising a number of waveguides 16, an output slab waveguide 18, and output waveguides 20. These sections are arranged such that the input waveguide 12 couples light from a fiber (not shown) to the input slab waveguide 14. In the input slab waveguide 14, the light is lanced into the arrayed waveguides 15 and propagates into the output slab waveguide 18. Finally, the light propagates from the output slab waveguide 18 into the output waveguides 20.

The optical path difference of each waveguide 16 introduces wavelength-dependent phase delays in the output slab waveguide 18. The phase difference of each wavelength interferes in the output slab waveguide 18 in such a manner that each wavelength contributes maximally at one of the output waveguides 20.

As already mentioned, such arrayed waveguide grating devices are part of optical networks which are capable of transmitting data with very high bit rates. However, there is one main constraint concerning a further increase of the bit rate, which is caused by the chromatic dispersion effect. This chromatic dispersion makes it necessary to integrate means for chromatic dispersion compensation, particularly in order to further increase the possible bit rates.

With reference to Figs. 2 to 4, different possibilities of compensating for chromatic dispersion will be described. All these possibilities have in common that the compensation is realized by a respective modification of the phase or amplitude distribution of the light travelling from the input waveguides 12 to the output waveguides 20. The inventors have found out that by deliberately influencing the amplitude or phase distribution, a chromatic dispersion compensation can be achieved within a certain extent.

It is to be noted that the examples described below are just a small selection for illustrative purposes and it is to be understood that the invention is not limited to these examples.

In Figs. 2A, B and C, some measures for modifying the amplitude distribution are shown. One possibility to achieve the desired amplitude distribution is to increase the losses of selected waveguides 16 by a waveguide misalignment, as shown in Fig. 2B or by a variation of the waveguide's cross section, as shown in Fig. 2C. These measures may be provided for any single waveguide being part of the arrayed waveguide 15. In Fig. 2B, the misalignment is indicated by reference numeral 22, and the variation of the cross section is indicated with reference numeral 24 in Fig. 2C. Here, the cross section of the waveguide 16 is reduced along a predetermined section of the waveguide.

A second possibility of modifying the amplitude distribution is to redistribute the power intensity coupled into the arrayed waveguides 16 by using variable-width tapered arrayed waveguides, as shown in Fig. 2A. It is apparent from this Figure, that the waveguides 16 have end sections 28 coupled to the output slab waveguide 14 which are designed differently with respect to their cross sections.

A further measure which is not shown in the Figures is to provide one or a plurality of trenches within the arrayed waveguide 15. These trenches are filled with a polymer providing a predetermined attenuation.

In many cases it is desired to provide means for tuning the amplitude distribution. One possibility for a variable modification of the amplitude distribution is to implement a short Mach-Zehnder interferometer substituting a central section of the waveguides 16 of the arrayed waveguide 15. An electrode in one of the arms of each Mach-Zehnder interferometer will provide a control of the amplitude propagating through each arrayed waveguide 16. With such a modification, values of about ± 90 ps/nm² inside the channel may be achievable for Gaussian transmission profiles.

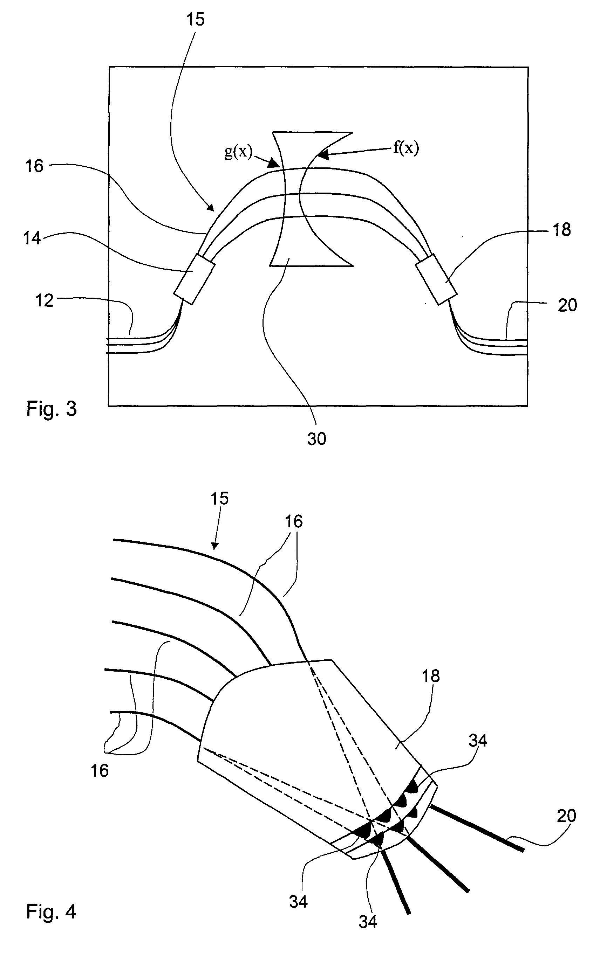

As already mentioned before, there are two main approaches for chromatic dispersion compensation, namely to modify amplitude distribution or to modify phase distribution. Some of the possibilities to modify the amplitude distribution have been described above. Now with respect to Figs. 3 and 4, some of the possibilities to modify the phase distribution are described.

One possibility to achieve a fixed chromatic dispersion compensation equal for all channels can be achieved by a change of the optical length of waveguides of the arrayed waveguide 16 by a variation of the physical length of the waveguides. This may be done by design or by irradiation of a usual design with UV light.

A measure for achieving a tunable dispersion compensation is to introduce in the optical path of the arrayed waveguide 16 an area causing a change of the refractive index.

A first solution is to fabricate an electrode with a predetermined shape over the area of the arrayed waveguide 16 and to vary the index of the waveguide by heating the electrode and the thermo-optical coefficient of the silica material of this area. This technical solution is shown in Fig. 3, in which the electrode is indicated with reference numeral 30. The electrode 30 has a shape following the functions g(y) and f(x). These functions are chosen as to optimize adjacent crosstalk and bandwidth.

An alternative solution, which is not shown in the Figures, is to provide at least one trench in the area of the arrayed waveguide 15. The trench or trenches are filled with a polymer material. Due to the thermo-optical coefficient of the polymer, usually two orders of magnitude higher than the one of silica, the trenches are smaller than the electrode 30. However, wide trenches introduce severe losses so that it is preferred to provide several trenches instead of one and to segment the electrode 30.

With such implementations, tunable dispersion values of about ± 90 ps/nm have been obtained by simulations for a Gaussian transmission profile.

The afore-mentioned measures for modifying the phase distribution are wavelength independent. However, there is also a technical solution for a wavelength dependent dispersion compensation. This solution is shown in Fig. 4. The modification of the phase distribution different for each output channel can be done by a variation of the index of the output slab waveguide 18. The physical space available for the modification of the phase distribution for each output channel is quite limited (about 200 x 70 µm² for standard design parameters). Due to that, the already mentioned electrode-over-silica solution is not possible. In order to provide a fixed differential (that means wavelength dependent or channel dependent) dispersion compensation, an irradiation by UV light of the areas marked with reference numeral 34 is proposed. In order to provide a tunable solution, it is proposed to form a set of trenches filled with polymer and an electrode for tuning by heating.

With these measures, a wavelength dependent dispersion compensation of about ± 17 ps/nm² over 40 channels at 200 GHz (64 nm spectrum range) can be reached.

It is to be understood that the measures to modify phase- or amplitude distribution may be used separately or in any combination. Further, it has to be noted that the modification of the phase distribution produces a compensation of the second order dispersion, whereas the amplitude distribution produces a compensation of the third order dispersion (also known as dispersion slope).

## Claims

1. Arrayed waveguide grating device (AWG) comprising an input slab waveguide (14), an output slab waveguide (18) and arrayed waveguides (15, 16) connecting said input and said output slab waveguide (14, 18), **characterized by** means (22, 24, 28, 30, 34) for modifying the phase and/or ampl i-tude distribution with the modification being selected such as to compensate for chromatic dispersion.

2. AWG according to claim 1, **characterized in that** said means is formed as an area in the region of the arrayed waveguides which provides a refractive index change in order to modify the phase distribution.

3. AWG according to claim 2, **characterized in that** said means comprises at least one electrode (30) for heating said area as to achieve an index change.

4. AWG according to claim 2, **characterized in that** said means comprises at least one trench in the arrayed waveguides which is filled with a polymer.

5. AWG according to claim 1, **characterized in that** said means is provided within said output slab waveguide (18) as areas (34) of different refractive indices as to achieve a phase distribution different for each output channel.

6. AWG according to claim 1, **characterized in that** said means are provided as tapered sections (28) in the arrayed waveguides (16) as to achieve a modification of the ampl i-tude distribution.

7. AWG according to claim 1, **characterized in that** said means is provided as a misalignment (22) within at least one of said arrayed waveguides (16) as to achieve a modification of the amplitude distribution.

8. AWG according to claim 1, **characterized in that** said means is provided as a variation of the cross-section (24) of at least one of said arrayed waveguides (16) as to achieve a modification of the amplitude distribution.

9. AWG according to claim 1, **characterized in that** said means comprises at least one Mach-Zehnder interferometer substituting a central section of at least one of said arrayed waveguides (16).

10. AWG according to claim 1, **characterized in that** said means comprises at least one trench within a waveguide (16) of the arrayed waveguide (15), the trench being filled with a polymer having a predetermined attenuation characteristic for modifying the amplitude distribution.

11. Method for compensating chromatic dispersion and/or dispersion slope in an arrayed waveguide grating device (AWG) (10) which comprises an input slab waveguide (14), an output slab waveguide (18) and an arrayed waveguide (15) co n-necting said input and said output slab waveguide, chara c-terized in that the phase and/or amplitude distribution is modified as to compensate the chromatic dispe rsion.

12. Method according to claim 11, **characterized in that** the phase distribution is modified by adjusting the optical length of the arrayed waveguide (15), preferably by a variation of the physical length of waveguides (16) of the arrayed waveguide (15).

13. Method according to claim 11, **characterized in that** the refractive index within an area along the optical path of the arrayed waveguide (15) is changed.

14. Method according to claim 13, **characterized in that** said index changed is provided by heating said area, preferably with an electrode (30) fed with an adjustable voltage.

15. Method according to claim 13, **characterized in that** said area comprises at least one trench filled with a polymer.

16. Method according to claim 11, **characterized in that** the phase distribution is modified differently for each output channel of the AWG, preferably by a variation of the refractive index, in the output slab waveguide.

17. Method according to claim 11, **characterized in that** the amplitude distribution is modified by adjusting the attenuation characteristic of at least one of the waveguides (16) of the arrayed waveguide (15).

18. Method according to claim 17, **characterized in that** the attenuation characteristic is adjusted by providing tapered sections (28) in the arrayed waveguides.

19. Method according to claim 17, **characterized in that** the attenuation characteristic is adjusted by misaligning (22) waveguides (16) of the arrayed waveguide (15).

20. Method according to claim 17, **characterized in that** the attenuation characteristic is adjusted by varying the cross-section of waveguides (16) of the arrayed waveguide (15).

21. Method according to claim 17, **characterized in that** the attenuation characteristic of at least one of the waveguides (16) of said arrayed waveguide (15) is modified by providing a region filled with a polymer.
